(19) Europäisches Patentamt / European Patent Office / Office européen des brevets

(11) **EP 3 859 610 A1**

(12) **EUROPEAN PATENT APPLICATION**

(43) Date of publication:
**04.08.2021 Bulletin 2021/31**

(51) Int Cl.:
*G06N 3/04* (2006.01)    *G06N 3/08* (2006.01)

(21) Application number: **20305081.0**

(22) Date of filing: **30.01.2020**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**KH MA MD TN** | (71) Applicant: **Dassault Systèmes**<br>**78140 Vélizy-Villacoublay (FR)**<br><br>(72) Inventor: **MEHR, Eloi**<br>**78140 Vélizy-Villacoublay (FR)**<br><br>(74) Representative: **Bandpay & Greuter**<br>**30, rue Notre-Dame des Victoires**<br>**75002 Paris (FR)** |

(54) **DEFORMATIONS BASIS LEARNING**

(57)    The invention notably relates to a computer-implemented method of machine-learning. The method comprises providing a dataset of 3D modeled objects. The method further comprises learning a neural network.

The neural network is configured for inferring a deformation basis of an input 3D modeled object. This constitutes an improved method of machine-learning.

$$= \underset{\alpha_1,\ldots,\alpha_p}{\mathrm{argmin}}\ \mathrm{d}_{CH}\left(p_i + \sum_{j=1}^{n} \alpha_j g_w(f_w(e_1),p_1)_j, q_1\right)$$

$$(\widehat{\alpha_1},\ldots,\widehat{\alpha_n})$$

$$p_1 + \sum_{j=1}^{n} \widehat{\alpha}_j g_w(f_w(e_1),p_1)_j$$

FIG. 2

**Description**

**FIELD OF THE INVENTION**

The invention relates to the field of computer programs and systems, and more specifically to a method, system and program of machine-learning for deforming 3D modeled objects.

**BACKGROUND**

A number of systems and programs are offered on the market for the design, the engineering and the manufacturing of objects. CAD is an acronym for Computer-Aided Design, e.g. it relates to software solutions for designing an object. CAE is an acronym for Computer-Aided Engineering, e.g. it relates to software solutions for simulating the physical behavior of a future product. CAM is an acronym for Computer-Aided Manufacturing, e.g. it relates to software solutions for defining manufacturing processes and operations. In such computer-aided design systems, the graphical user interface plays an important role as regards the efficiency of the technique. These techniques may be embedded within Product Lifecycle Management (PLM) systems. PLM refers to a business strategy that helps companies to share product data, apply common processes, and leverage corporate knowledge for the development of products from conception to the end of their life, across the concept of extended enterprise. The PLM solutions provided by Dassault Systèmes (under the trademarks CATIA, ENOVIA and DELMIA) provide an Engineering Hub, which organizes product engineering knowledge, a Manufacturing Hub, which manages manufacturing engineering knowledge, and an Enterprise Hub which enables enterprise integrations and connections into both the Engineering and Manufacturing Hubs. All together the system delivers an open object model linking products, processes, resources to enable dynamic, knowledge-based product creation and decision support that drives optimized product definition, manufacturing preparation, production and service.

In this context and other contexts, deforming 3D modeled objects is gaining wide importance.

The following papers relate to this field and are referred to hereunder:

[1] W. Wang, D. Ceylan, R. Mech, and U. Neumann. 3dn: 3d deformation network. In Conference on Computer Vision and Pattern Regognition (CVPR), 2019.

[2] T. Groueix, M. Fisher, V. G. Kim, B. Russell, and M. Aubry. AtlasNet: A Papier-Mâché Approach to Learning 3D Surface Generation. In Conference on Computer Vision and Pattern Regognition (CVPR), 2018.

[3] Reconstructing a 3D Modeled Object. Patent US9978177B2, granted in 2018. Éloi Mehr and Vincent Guitteny.

[4] D. Jack, J. K. Pontes, S. Sridharan, C. Fookes, S. Shirazi, F. Maire, and A. Eriksson. Learning free-form deformations for 3d object reconstruction. In Asian Conference on Computer Vision (ACCV), 2018.

[5] I. Kokkinos, and A. Yuille. Unsupervised Learning of Object Deformation Models. In International Conference on Computer Vision (ICCV), 2007.

[6] J. Mairal, F. Bach, and J. Ponce. Sparse Modeling for Image and Vision Processing. New Foundations and Trends, 2014.

[7] V. Blanz and T. Vetter. A morphable model for the synthesis of 3d faces. In SIGGRAPH, 1999.

[8] C. Qi, H. Su, K. Mo, and L. Guibas. Pointnet: Deep learning on point sets for 3d classification and segmentation. In Conference on Computer Vision and Pattern Regognition (CVPR), 2017.

[9] R. Hanocka, A. Hertz, N. Fish, R. Giryes, S. Fleishman, and D. Cohen-Or. Meshcnn: A network with an edge. In SIGGRAPH, 2019.

[10] Eloi Mehr, Ariane Jourdan, Nicolas Thome, Matthieu Cord, and Vincent Guitteny. DiscoNet: Shapes Learning on Disconnected Manifolds for 3D Editing. In ICCV 2019.

However, there is still a need for an improved solution for deforming 3D modeled objects.

**SUMMARY OF THE INVENTION**

It is therefore provided a computer-implemented method of machine-learning. The method comprises providing a dataset of 3D modeled objects. The method further comprises learning a neural network. The neural network is configured for inferring a deformation basis of an input 3D modeled object. The method may be referred to as "the learning method".

This constitutes an improved solution for deforming 3D modeled objects.

Notably, the neural network learnt by the learning method is configured for taking as input a 3D modeled object and outputting a deformation basis of the 3D modeled object. The deformation basis comprises vectors each forming a deformation of the input 3D modeled object. This allows to obtain many deformations of the 3D modeled object, as the vectors of the basis may be linearly combined, each possible linear combination yielding a different deformation of the 3D modeled object. The learning method thus allows to increase the possibilities of deformation of the 3D modeled object. Furthermore, the learning method allows to do so by computing the deformation basis once and for all, by a single application of the learnt neural network, such that only linear combinations need be performed after that. This allows to compute deformations efficiently, notably in terms of computing time and resource use. It is also to be noted that the neural network does not require a target deformation of the 3D modeled object in order to yield the deformation basis: the neural network alone yields a basis of deformation vectors which then may be linearly combined to reach a target deformation of the input 3D modeled object. The learning method thus has a great generalization power and maximizes expressiveness of an input 3D modeled object.

The neural network may infer a local deformation basis which may comprise local deformation vectors, *i.e.* each vector representing a local (*e.g.* small) deformation of the input 3D modeled object. This allows to deform the 3D modeled object realistically in a local neighborhood thereof (*i.e.* in a vicinity of the 3D modeled object). Said otherwise, the neural networks outputs a satisfactory basis in the sense that the basis allows to deform in a physically acceptable manner input objects towards close objects.

Furthermore, the neural network is learnt on the 3D modeled objects of the dataset, which are, at least in majority (*e.g.* in totality), plausible 3D modeled objects. Thereby, the neural network yields a basis of plausible vectors of deformation of the input 3D modeled object. As previously discussed, these vectors may be linearly combined, thereby yielding plausible deformations of the input 3D modeled object, for example in a local neighborhood thereof.

Moreover, the provided dataset need not be made of objects of a same category (*e.g.* all chairs) for the neural network to be learnt to infer a basis of plausible deformation vectors of an input 3D modeled object. Specifically, if the provided dataset is made of or substantially made of a large amount of 3D modeled objects of a same category (*e.g.* all chairs), the neural network will admittedly infer physically realistic deformation basis of an object of this category (*e.g.* a chair). However, the neural network may do so even if the 3D modeled objects of the provided dataset forms different categories (*e.g.* chairs and benches) and even if these categories are not represented by a large amount of 3D modeled objects within the provided dataset. Notably, the learning does not require the objects of the provided dataset to be annotated with labels indicating of their respective categories (if any). Also, the learning does not require the use of template modeled objects such as mean shapes of object's categories. In addition, the provided dataset need not be clustered according to object's categories. This further improves the generalization power of the neural network.

Nevertheless, the generalization power of the neural network is further improved when the provided dataset comprises two or more categories of 3D modeled objects forming a manifold (e.g. chairs and benches). Indeed, the manifold may be formed by different categories of objects having at least two-by-two a connectivity between them, that is, a certain amount of shared features/characteristics (*e.g.* as do chairs and benches). Because of this, a single vector of the deformation basis may be a meaningful plausible deformation for many object categories within the manifold (*e.g.* the seat of chairs and benches may be deformed similarly). Said otherwise, if the provided dataset forms a manifold of 3D modeled object (*e.g.* chairs and benches), the neural network is learnt in such a manner that it mutualizes between the deformations of different categories of objects. This allows the neural network to learn to infer physically realistic/acceptable deformation basis even if the provided dataset is made of few modeled objects of the different categories forming the manifold. This improves the generalization power of the neural network.

Generally speaking, the generalization power that the learning imparts to the neural network is such that the learning requires a training dataset (*i.e.* the provided dataset) comprising, as compared to other deep learning frameworks, less 3D modeled objects per category without impacting the ability of the neural network to infer deformations basis. Specifically, less objects per categories are required as the neural network is able to mutualize between the deformations learnt on different categories. However, if the provided dataset comprises only one category of objects of two very different categories, a larger amount of objects may be required.

The deformations obtained by using the deformation basis outputted by the neural network may be used in 3D modeling, for example for 3D editing applications. The basis inferred by the neural network may also be used in other applications, such as shape matching and non-linear deformations inference, as further discussed hereinafter. Furthermore, the neural network provides linear deformations of an input 3D modeled object, which are efficient for use in real-time applications.

The learning method may comprise one or more of the following:

- the neural network comprises:

  ◦ an encoder configured to take as input a 3D modeled object and to output a latent vector representing the input 3D modeled object, and
  ◦ a deep feedforward neural network configured to take as input a latent vector outputted by the encoder and to output a deformation basis of a 3D modeled object represented by the latent vector;

- the learning comprises, for at least a part of the dataset, minimizing a loss which, for each 3D modeled object of the at least a part of the dataset and for each candidate deformation basis having vectors, penalizes a distance between a deformation of the 3D modeled object by a linear combination of the vectors and another 3D modeled object;
- the learning is carried out mini-batch by mini-batch and comprises, for each mini-batch, minimizing the loss;
- the learning comprises selecting said another 3D modeled object among 3D modeled objects of the at least a part of the dataset, based on a distance from the 3D modeled object of the at least a part of the dataset;
- said another 3D modeled object is, among 3D modeled objects of the at least a part of the dataset, a closest 3D modeled object to the 3D modeled object of the at least a part of the dataset;
- the learning is carried out mini-batch by mini-batch and comprises, for each mini-batch, minimizing the loss and selecting said closest 3D modeled object among 3D modeled objects of the mini-batch;
- the loss penalizes a minimum of the distance between the deformation of the 3D modeled object by the linear combination of the vectors and said another 3D modeled object;
- the loss is of the type:

$$E(w) = \sum_{i=1}^{N} \min_{\alpha_1,\ldots,\alpha_p} d_{CH}\left( p_i + \sum_{j=1}^{n} \alpha_j g_w(f_w(e_i),p_i)_j , q_i \right),$$

where:

- $e_1,\ldots,e_N$ are the 3D modeled objects of the at least a part of the dataset, $N$ being the number of objects in the at least a part of the dataset,
- $p_1,\ldots,p_N$ are points clouds respectively obtained from $e_1,\ldots,e_N$.
- for each 3D modeled object $e_i$, $g_w(f_w(e_i),p_i)_1,\ldots,g_w(f_w(e_i),p_i)_n$ are the vectors of a candidate deformation basis of the 3D modeled object, n being the size of the candidate deformation basis,
- $p_i + \sum_{j=1}^{n} \alpha_j g_w(f_w(e_i),p_i)_j$ is the deformation of the 3D modeled object $e_i$ by the linear combination of the vectors, $\alpha_1,\ldots,\alpha_n$ being coefficients of the linear combination,
- $q_i$ is a point cloud obtained from said another 3D modeled object,
- $d_{CH}$ is the distance,
- the neural network having weights, w represents the weights of the neural network,
- $f_w$ is an encoder configured to take as input a 3D modeled object and to output a latent vector representing the input 3D modeled object, and
- $g_w$ is a deep feedforward neural network configured to take as input a latent vector outputted by the encoder and to output a deformation basis of a 3D modeled object represented by the latent vector;

- the loss further penalizes a sparsity-inducing function that takes as input coefficients of the linear combination; and/or
- the loss further rewards orthonormality of the candidate deformation basis.

It is further provided a neural network learnable according to the learning method, for example a neural network directly learnt (i.e. having been learnt) by the learning method.

It is further provided a method of use of the neural network.

The method of use may comprise providing the neural network (for example by performing the learning method) and applying the neural network to one or more 3D modeled objects (*i.e.* using the neural network for inferring one or more deformation basis each respective to a respective input 3D modeled object). The method of use may form an application of the learning method. The application may be depth-frame reconstruction, shape matching, or 3D editing. The method of use may be integrated to the learning method, *e.g.* as a step performed after the learning of the neural network, the learning method and the method of use forming in such a case a computer-implemented method for inferring deformation of a 3D modeled object.

It is further provided a computer program comprising instructions which, when the computer program is carried out on a computer, cause the computer to carry out the learning method and/or the method of use.

It is further provided a computer readable data storage medium having recorded thereon the computer program and/or the neural network.

It is further provided a computer comprising a processor coupled to a memory, the memory having recorded thereon the computer program and/or the neural network.

## BRIEF DESCRIPTION OF THE DRAWINGS

Embodiments of the invention will now be described, by way of non-limiting example, and in reference to the accompanying drawings, where:

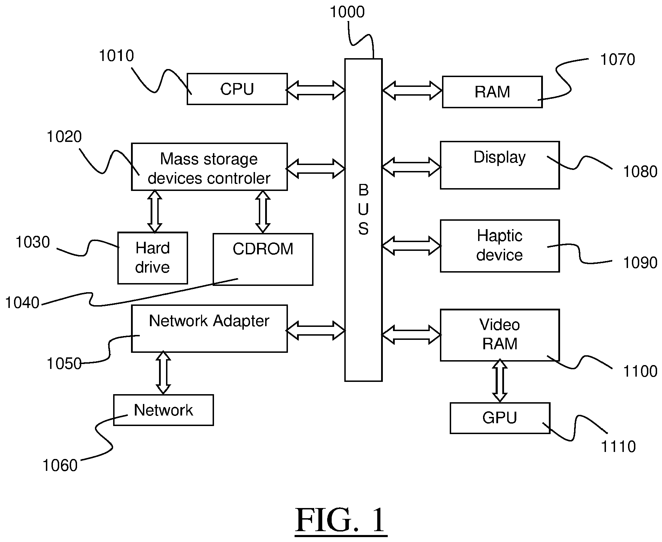

- FIG. 1 shows an example of the computer; and
- FIG.s 2 to 4 illustrate the methods.

## DETAILED DESCRIPTION OF THE INVENTION

The learning method and the method of use are computer-implemented methods.

This means that steps (or substantially all the steps) of the methods are executed by at least one computer, or any system alike. Thus, steps of the method are performed by the computer, possibly fully automatically, or, semi-automatically. In examples, the triggering of at least some of the steps of the methods may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g. one for the program, and possibly one for the database).

The methods generally manipulate modeled objects. A modeled object is any object defined by data stored *e.g.* in the database. By extension, the expression "modeled object" designates the data itself. According to the type of the system, the modeled objects may be defined by different kinds of data. The system may indeed be any combination of a CAD system, a CAE system, a CAM system, a PDM system and/or a PLM system. In those different systems, modeled objects are defined by corresponding data. One may accordingly speak of CAD object, PLM object, PDM object, CAE object, CAM object, CAD data, PLM data, PDM data, CAM data, CAE data. However, these systems are not exclusive one of the other, as a modeled object may be defined by data corresponding to any combination of these systems. A system may thus well be both a CAD and PLM system.

By CAD system, it is additionally meant any system adapted at least for designing a modeled object on the basis of a graphical representation of the modeled object, such as CATIA. In this case, the data defining a modeled object comprise data allowing the representation of the modeled object. A CAD system may for example provide a representation of CAD modeled objects using edges or lines, in certain cases with faces or surfaces. Lines, edges, or surfaces may be represented in various manners, e.g. non-uniform rational B-splines (NURBS). Specifically, a CAD file contains specifications, from which geometry may be generated, which in turn allows for a representation to be generated. Specifications of a modeled object may be stored in a single CAD file or multiple ones. The typical size of a file representing a modeled object in a CAD system is in the range of one Megabyte per part. And a modeled object may typically be an assembly of thousands of parts.

In the context of CAD, a modeled object may typically be a 3D modeled object, e.g. representing a product such as a part or an assembly of parts, or possibly an assembly of products. By "3D modeled object", it is meant any object which is modeled by data allowing its 3D representation. A 3D representation allows the viewing of the part from all angles. For example, a 3D modeled object, when 3D represented, may be handled and turned around any of its axes, or around any axis in the screen on which the representation is displayed. This notably excludes 2D icons, which are not 3D modeled. The display of a 3D representation facilitates design (i.e. increases the speed at which designers statistically accomplish their task). This speeds up the manufacturing process in the industry, as the design of the products is part of the manufacturing process.

The 3D modeled object may represent the geometry of a product to be manufactured in the real world subsequent to the completion of its virtual design with for instance a CAD software solution or CAD system, such as a (*e.g.* mechanical) part or assembly of parts (or equivalently an assembly of parts, as the assembly of parts may be seen as a part itself from the point of view of the methods, or the methods may be applied independently to each part of the assembly), or more generally any rigid body assembly (*e.g.* a mobile mechanism). A CAD software solution allows the design of products in various and unlimited industrial fields, including: aerospace, architecture, construction, consumer goods, high-tech devices, industrial equipment, transportation, marine, and/or offshore oil/gas production or transportation. Any 3D modeled object involved in the methods may thus represent an industrial product which may be any mechanical part, such as a part of a terrestrial vehicle (including *e.g.* car and light truck equipment, racing cars, motorcycles, truck and motor equipment, trucks and buses, trains), a part of an aerial vehicle (including e.g. airframe equipment, aerospace equipment, propulsion equipment, defense products, airline equipment, space equipment), a part of a naval vehicle (including e.g. navy equipment, commercial ships, offshore equipment, yachts and workboats, marine equipment), a general mechanical part (including *e.g.* industrial manufacturing machinery, heavy mobile machinery or equipment, installed equipment, industrial equipment product, fabricated metal product, tire manufacturing product), an electro-mechanical or electronic part (including e.g. consumer electronics, security and/or control and/or instrumentation products, computing and communication equipment, semiconductors, medical devices and equipment), a consumer good (including *e.g.* furniture, home and garden products, leisure goods, fashion products, hard goods retailers' products, soft goods retailers' products), a packaging (including *e.g.* food and beverage and tobacco, beauty and personal care, household product packaging).

FIG. 1 shows an example of the system, wherein the system is a client computer system, *e.g.* a workstation of a user.

The client computer of the example comprises a central processing unit (CPU) 1010 connected to an internal communication BUS 1000, a random access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks; and CD-ROM disks 1040. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the methods. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the methods by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the methods.

The providing of the dataset of 3D modeled objects is now discussed. Prior to this discussion, data structures involved therein are now discussed.

Any 3D modeled object herein may form a discrete geometrical representation of a 3D shape, e.g. representing an object from the real world such as a mechanical part as previously discussed. The discrete geometrical representation is herein a data structure which comprises a discrete set of pieces of data. Each piece of data represents a respective geometrical entity positioned in a 3D space. Each geometrical entity represents a respective location of the 3D shape (in other words, a respective portion of material constitutive of a solid represented by the 3D shape). The aggregation (*i.e.* union or juxtaposition) of the geometrical entities represents altogether the 3D shape. Any discrete geometrical representation herein may in examples comprise a number of such pieces of data higher than 100, 1000, or 10000.

Any discrete geometrical representation herein may for example be a 3D point cloud, each geometrical entity being a point. Any discrete geometrical representation herein may alternatively be a 3D mesh, each geometrical entity being a mesh tile or face. Any 3D mesh herein may be regular or irregular (*i.e.* consisting or not of faces of a same type). Any 3D mesh herein may be a polygonal mesh, for example a triangular mesh. Any 3D mesh herein may alternatively be a B-Rep. Any 3D mesh herein may be obtained from a 3D point cloud, for example by triangulating the 3D point cloud (*e.g.* with a Delaunay triangulation). Any 3D point cloud herein may be determined from physical measurements on a real object, for example within a 3D reconstruction process. The 3D reconstruction process may comprise providing the real object, providing one or more physical sensors each configured for acquiring a respective physical signal, and acquiring one or more respective physical signals by operating the one or more physical sensors on the real object (*i.e.*

scanning the real object with each sensor). The 3D reconstruction may then automatically determine a 3D point cloud and/or a 3D mesh based on the measurements, according to any known technique. The one or more sensors may comprise a plurality of (*e.g.* RGB, and/or image or video) cameras and the determination may comprise a structure-from-motion analysis. The one or more sensors may alternatively or additionally comprise one or more depth sensors (*e.g.* on an RGB-depth camera) and the determination may comprise a 3D reconstruction from depth data. The one or more depth sensors may for example comprise a laser (*e.g.* a lidar) or an ultrasound emitter-receiver.

Any 3D point cloud or 3D mesh herein may alternatively be obtained from a 3D modeled object representing a skin (*i.e.* outer surface) of a solid (*e.g.* corresponding to B-Rep model, which represents a skin, *i.e.* an exact surface), for example by raycasting on the 3D modeled object or tessellating the 3D modeled object. The tessellating may be performed according to any 3D modeled object rendering process. Such a rendering process may be coded on any CAD system in order to display a graphical representation of the 3D modeled object. The 3D modeled object may be designed or have been designed by a user with a CAD system.

The providing of the dataset may comprise forming the dataset, *e.g.* by creating the 3D modeled objects. Alternatively, the providing of the dataset may comprise retrieving the dataset from a (*e.g.* distant) memory where it has been stored subsequent to its creation. The 3D modeled objects of the dataset may all be 3D point clouds, *e.g.* resulting from a pre-processing of 3D meshes. Alternatively, they may all be 3D meshes. In such a case, the learning method may comprise a pre-processing of these meshes which samples them into 3D point clouds. The pre-processing may then comprise centering each 3D mesh. The pre-processing may then comprise rescaling independently each 3D mesh's dimensions such that the mesh vertices exactly fits in a unit cube. The pre-processing may then comprise extracting a dense point cloud from each normalized shape in the dataset, *e.g.* by raycasting each one on 6 orthographic views. The pre-processing may then comprise uniformly sub-sampling each point cloud (*e.g.* by downsampling each point cloud to the same size). The sub-sampling may start by a random point of the point cloud and iteratively pick the furthest point of the point cloud from the already selected points, reaching the desired number of points.

The 3D modeled objects of the dataset may be plausible (*e.g.* realistic) 3D modeled object. A plausible 3D modeled object may designate a 3D modeled object representing a real world object, such as a plausible mechanical part. A plausible mechanical part may designate a mechanical part realistically manufacturable in a real-world industrial manufacturing process. A plausible mechanical part may refer to a mechanical part which respects all the constraints that must be respected in order to realistically manufacture the mechanical part in a real-world industrial manufacturing process. The constraints may comprise one or more of the following: mechanical constraints (*e.g.* constraints resulting from the laws of classic mechanics), functional constraints (*e.g.* constraints relative to one or more mechanical functions to be performed by the mechanical part once manufactured), manufacturing constraints (*e.g.* constraints pertaining to the ability of applying one or more manufacturing tools to the mechanical part during one or more manufacturing processes for manufacturing the mechanical part), structural constraints (e.g. constraints pertaining to the strength and/or resistance of the mechanical part) and/or assembly constraints (*e.g.* constraints defining how the mechanical part can be assembled with one or more other mechanical parts).

As previously discussed, the 3D modeled objects of the provided dataset may all or substantially all belong to a single category of 3D modeled objects. Alternatively, they may form different categories of 3D modeled objects, e.g. said categories forming a manifold. In any case, the 3D modeled objects of the dataset represent each a respective object from the real world, such as mechanical part as previously discussed.

The learning of the neural network is now discussed.

As known per se from the field of machine-learning, the processing of an input by a neural network includes applying operations to the input, the operations being defined by data including weight values. Learning a neural network thus includes determining values of the weights based on a dataset configured for such learning, such a dataset being possibly referred to as a learning dataset or a training dataset. For that, the dataset includes data pieces each forming a respective training sample. The training samples represent the diversity of the situations where the neural network is to be used after being learnt. Any dataset referred herein may comprise a number of training samples higher than 1000, 10000, 100000, or 1000000. Herein, the neural network is learnt on the provided dataset, which means that the provided dataset is a learning/training dataset of the neural network. The learning may be carried out by any suitable known method.

The neural network is configured for inferring a deformation basis of an input 3D modeled object. In other words, the neural network takes as input a 3D modeled object and outputs a deformation basis of the 3D modeled object. For that, the input 3D modeled object is of the same data type than the 3D modeled objects of the dataset. For example, if the 3D modeled objects of the dataset are 3D meshes, the input 3D modeled object is also a 3D mesh. Alternatively, if the 3D modeled objects of the dataset are 3D point clouds, the input 3D modeled object is also a 3D point cloud. The 3D modeled object may nonetheless be a 3D point cloud that results from a sampling of a mesh. The deformation basis is a set of vectors each being a direction of deformation. The vectors may be linearly combined to deform the input 3D modeled object, the linear combination with its coefficients (also referred to as amplitudes) set yielding the deformation. The vectors may be linearly combined in such a way that if the linear combination is small enough, the deformed input 3D modeled object is close to the input 3D modeled object. In such a case the deformation thereof is realistic. Mathematically, the deformation is realist as long as the manifold thereof stays sufficiently close to the deformation, which is on the tangent space, the latter being defined by the deformation basis. The deformation basis may be a basis in the meaning of linear algebra, that is a set of linearly independent vectors, the basis being possibly normalized, e.g. orthonormal. Specifically, the learning aims for the neural network to infer, or at least to tend to infer, a basis of deformation vectors which are linearly independent (e.g. uncorrelated and/or orthonormal, as further discussed hereinafter). The deformation basis may have a fixed size (e.g. between 2 and 10 vectors, or more than 10 vectors). In other words, the neural network may always (*i.e.* for each input 3D modeled object) output a deformation basis having a same fixed number of vectors. Where the dataset is made of plausible 3D modeled objects, the neural network infers a basis of plausible deformation vectors of the 3D modeled objects, because it is learnt to do so.

The neural network has an architecture configured for taking as input a 3D modeled object and to output its deformation basis. The neural network may comprise an encoder and a deep feedforward neural network. The encoder is configured to take as input a 3D modeled object and to output a latent vector representing the input 3D modeled object. The encoder may thus be configured to take as input a 3D mesh or a 3D point cloud, *e.g.* sampled from a 3D mesh. The deep feedforward neural network is configured to take as input a latent vector outputted by the encoder and to output a deformation basis of a 3D modeled object represented by the latent vector. The encoder architecture may be based on PointNet (such as described for example in previously-cited reference [8], which is incorporated herein by reference) or any extension thereof. Alternatively, the encoder architecture may use mesh topology (*i.e.* if the 3D modeled objects of the dataset are 3D meshes), for example as done in MeshCNN (see for example previously cited reference [9], which is incorporated herein by reference).

The learning may comprise, for at least a part of the dataset, minimizing a loss. For each 3D modeled object of the at least a part of the dataset and for each candidate deformation basis having vectors, the loss penalizes a distance between a deformation of the 3D modeled object by a linear combination of the vectors and another 3D modeled object.

The minimizing of the loss is now discussed.

The at least a part of the dataset is a sample of 3D modeled objects of the dataset. For example, the at least a part of the dataset may be a mini-batch, the learning being in such a case carried out mini-batch by mini-batch and comprising, for each mini-batch, minimizing the loss. The concept of learning mini-batch by mini-batch is known *per se* from the field of machine-learning. For example, the learning may implement any known mini-batch stochastic optimization method, such as a mini-batch stochastic gradient descent. Learning mini-batch by mini-batch improves efficiency of the learning, as known *per se* from the field of machine-learning.

For each 3D modeled object of the at least a part of the dataset, the learning assesses a deformation basis of the modeled object outputted by the neural network with its current weight values. This computed deformation basis forms a candidate deformation basis of the 3D modeled object. The loss penalizes a distance between a deformation of the 3D modeled object by a linear combination of the vectors of this candidate basis and another 3D modeled object. This means that the loss tends to increase when the distance between the deformation of the 3D modeled object by the linear combination of the vectors of this candidate basis and said another 3D modeled object is large. If this is the case, the learning, which minimizes the loss, modifies the weights of the neural network to lower the value of the loss, thus yielding new candidates. The learning does so (e.g. mini-batch by mini-match) until the loss reaches its minimum, or at least a sufficiently small value (*e.g.* with respect to a convergence criterion).

Said another 3D modeled object may be a target object, *i.e.* in which the linear combination of the vectors is to deform the 3D modeled object. This allows to train the neural network to infer a basis of deformations. For example, said another 3D modeled object may be, among 3D modeled objects of the at least a part of the dataset, a close 3D modeled object to the 3D modeled object of the at least a part of the dataset. In other words, the learning may notably comprise selecting said another 3D modeled object among 3D modeled objects of the at least a part of the dataset, based on a distance from the 3D modeled object of the at least a part of the dataset. The selecting may comprise computing the distances between each 3D modeled object of the at least a part of the dataset and said 3D modeled object of the at least a part of the dataset, and assessing which 3D modeled objects are close, that is for which 3D modeled objects the distance is small. Then the selecting may select a 3D modeled object for which the distance is small. In examples, the selecting may assess which 3D modeled object is the closest, that is for which 3D modeled object the distance is the smallest. In other words, the selecting computes a minimum of the distances and assesses which 3D modeled object yields this minimum. In these examples, said another 3D modeled object is, among 3D modeled objects of the at least a part of the dataset, a closest 3D modeled object to the 3D modeled object of the at least a part of the dataset. In examples, the learning may be carried out mini-batch by mini-batch and comprises, for each mini-batch, minimizing the loss and selecting said closest 3D modeled object among 3D modeled objects of the mini-batch. Said otherwise, the selecting of the another 3D modeled object is among objects of a mini-batch, the at least a part of the dataset being a mini-batch.

Said distance from the 3D modeled object of the at least a part of the dataset may be any distance, such as a distance between 3D modeled objects, e.g. a distance in 3D between point clouds or 3D meshes. In examples, the distance may be a distance in a latent space, as now discussed.

Specifically, in these examples, the learning method may comprise providing, e.g. before the learning, such as at an initial stage of the learning method, another encoder which is configured to take as input a 3D modeled object of the provided dataset and to output a latent vector encoding this 3D modeled object. Said another encoder may be trained in an autoencoder framework, or in a classification task, or by any other machine-learning method, in order to learn a meaningful latent space of 3D modeled objects, as known *per se* from the field of machine-learning. The providing of said another encoder may comprise training said another encoder. Alternatively, said another encoder may be pre-trained. In these examples, the distance, say between a first 3D modeled object and a second 3D modeled object, may be a distance in the latent space of said another encoder between the result of applying said another encoder to the first 3D modeled object and the result of applying said another encoder to the second 3D modeled object. This latent space distance allows to train the neural network to infer a basis of deformations with more accuracy, as the latent vectors outputted by said another encoder capture the semantics of the encoded 3D modeled objects. Said otherwise, said encoder implicitly clusters the dataset with respect to semantics. This allows to determine said another 3D modeled object as the most similar 3D modeled object to said 3D modeled object of the at least a part of the dataset. The use of this latent space distance thus improves accuracy of the learning, as well as efficiency, e.g. as compared to a distance in 3D modeled object space which can cost more to compute.

The selecting of said another 3D modeled object may be carried out before the minimizing. For example, the results of applying said another encoder to the 3D modeled objects of the dataset may be pre-computed, *i.e.* computed before the minimizing.

The linear combination has coefficients, each corresponding to the contribution of a respective vector in the combination. The coefficients may be computed by a neural network during the learning. Alternatively, they may be the result of an optimization which is performed during the learning.

The loss may penalize a minimum of the distance between the deformation of the 3D modeled object by the linear combination of the vectors and said another 3D modeled object. This selects the best deformation by a linear combination, that is the one which minimizes the distance, when minimizing the loss. The minimum may be for example be the minimum of the distance between the deformation of the 3D modeled object by a linear combination of the vectors and said another 3D modeled object among all possible values of the coefficients of the linear combination. The loss penalizes the minimum in that the loss tends to increase when the minimum is large. If this is the case, the learning, which minimizes the loss, modifies the weights of the neural network to lower the value of the loss. The learning does so (e.g. mini-batch by mini-batch) until the loss reaches its minimum, or at least a sufficiently small value (e.g. with respect to a convergence criterion).

The loss may be of the type:

$$E(w) = \sum_{i=1}^{N} \min_{\alpha_1,\dots,\alpha_p} d_{CH}\left( p_i + \sum_{j=1}^{n} \alpha_j g_w(f_w(e_i), p_i)_j, q_i \right),$$

where:

- $e_1,\dots,e_N$ are the 3D modeled objects of the at least a part of the dataset, $N$ being the number of objects in the at least a part of the dataset,
- $p_1,\dots,p_N$ are points clouds respectively obtained from $e_1,\dots,e_N$,
- for each 3D modeled object $e_i$, $g_w(f_w(e_i),p_i)_1,\dots,g_w(f_w(e_i),p_i)_n$ are the vectors of a candidate deformation basis of the 3D modeled object, n being the size of the candidate deformation basis,
- $p_i + \sum_{j=1}^{n} \alpha_j g_w(f_w(e_i), p_i)_j$ is the deformation of the 3D modeled object $e_i$ by the linear combination of the vectors, $\alpha_1,\dots,\alpha_n$ being coefficients of the linear combination,
- $q_i$ is a point cloud obtained from said another 3D modeled object,
- $d_{CH}$ is the distance,
- the neural network having weights, w represents the weights of the neural network,
- $f_w$ is an encoder configured to take as input a 3D modeled object and to output a latent vector representing the input 3D modeled object, and
- $g_w$ is a deep feedforward neural network configured to take as input a latent vector outputted by the encoder and to output a deformation basis of a 3D modeled object represented by the latent vector.

$e_1,\dots,e_N$ may already be 3D point clouds, in which case $e_1 = p_1,\dots, e_N = p_N$. Alternatively, $e_1,\dots, e_N$ may be 3D meshes, in which case $p_1,..., p_N$ may result from a sampling of $e_1,..., e_N$. $d_{CH}$ may be any 3D distance between 3D point clouds, such as the Earth Mover distance or the Chamfer distance. $d_{CH}$ may in example be of the type:

$$d_{CH}(p,q) = \sum_{y \in p} \min_{z \in q} \|y - z\|_2^2 + \sum_{z \in q} \min_{y \in p} \|y - z\|_2^2$$

$q_i$ may be computed as follows. Let $f'$ be the previously discussed another encoder. Then for each i, the learning method determines

$$i' = \operatorname*{argmin}_{j \in [\![1,...,N]\!]\backslash\{i\}} \|f'(e_i) - $$

$f'(e_j)\|_2$. Then $q_i$ is given by $q_i = p_{i'}$. As previously discussed, the vectors $f'(e_j)$ can be pre-computed.

The loss may further penalize, for each 3D modeled object and each candidate deformation basis, (*e.g.* a minimum of) a sparsity-inducing function that takes as input coefficients of the linear combination. The sparsity function may for example be the L1-norm of the coefficients of the linear combination (see for example reference [6], which is incorporated herein by reference), as previously discussed. In other words, the loss tends to increase when (*e.g.* the minimum of) the sparsity-inducing function is large. If this is the case, the learning, which minimizes the loss, modifies the weights of the neural network to lower the value of the loss. The learning does so (*e.g.* mini-batch by mini-batch) until the loss reaches its minimum, or at least a sufficiently small value (*e.g.* with respect to a convergence criterion).The loss may in this case be of the type:

$$E(w) = \sum_{i=1}^{N} \min_{\alpha_1,...,\alpha_p} d_{CH}\left(p_i + \sum_{j=1}^{n} \alpha_j g_w(f_w(e_i), p_i)_j, q_i\right) + \lambda\phi(\alpha_1, ..., \alpha_p),$$

$\lambda$ being a trade-off parameter (which is a concept well-known from the field of machine-learning), $\phi$ being the sparsity-inducing function, such as the $L^1$ norm (see for example previously cited reference [6], which is incorporated herein by reference), $(\alpha_1,..., \alpha_p)$ being a vector of the coefficients, also referred to as a vector of amplitudes.

This allows to render the coefficients/amplitudes sparse during the learning. Ultimately, this allows the neural network to learn to output deformation basis vectors which are uncorrelated, which further increases the generalization power of the learning method. Notably, the neural network learnt in such a way outputs a satisfactory basis, as its sparsity allows to use few vectors to compute a deformation of the input 3D modeled object by a linear combination of the basis vectors. Also, the output basis is, or at least tends to be, a basis in the meaning of linear algebra.

The loss may further reward, for each 3D modeled object and each candidate deformation basis, orthonormality of the candidate deformation basis. In other words, the loss may further comprise a term capturing the orthonormality of the deformation basis of the 3D modeled object as inferred by the neural network with its current weight values, the term tending to be small when the deformation basis tends to be orthonormal. The loss may in this case be of the type:

$$E(w) = \sum_{i=1}^{N} \min_{\alpha_1,...,\alpha_p} d_{CH}\left(p_i + \sum_{j=1}^{n} \alpha_j g_w(f_w(e_i), p_i)_j, q_i\right) + \lambda\phi(\alpha_1, ..., \alpha_p)$$

$$+ \delta\|g_w(f_w(e_i), p_i)g_w(f_w(e_i), p_i)^T - \mathrm{Id}_{n \times n}\|_2,$$

$\delta$ being a trade-off parameter (which is a concept well-known from the field of machine-learning). This further allows the neural network to learn to output deformation basis vectors which are uncorrelated, as they tend to be orthonormal. Thereby, such a basis is, or at least tends to be, a basis in the meaning of linear algebra.

The loss may further comprise any suitable regularization function, as known *per se* from the field of machine learning.

An implementation of the learning method is now discussed.

This implementation brings improvements to the fields of 3D Modeling and 3D Machine-Learning. The results of this implementation may be used in fields such as virtual and augmented reality (more generally, any kind of immersive experience), video games, manufacturing and 3D printing, or 3D modeling. This implementation provides a solution to compute a realistic sparse deformations linear basis for any 3D modeled object, which can then be exploited to perform shape synthesis, shape reconstruction from image, or shape matching.

This implementation allows to provide any 3D modeled object with a plausible linear deformations basis, such that the model can be realistically deformed in a local neighborhood by any linear combination of the deformations vectors that constitute its basis. Such a deformation can be used in 3D modeling software, especially for 3D editing applications. Namely, it can be used for the inference of large non-linear deformations and shape matching.

This implementation trains a neural network (the neural network learnt at the learning) that learns a linear 3D deformation field with sparse constraints, in order to get plausible deformations independent of each other. Starting from the provided dataset, which is a dataset of unlabeled 3D modeled object, this implementation learns (at the learning) a neural network that infers a deformation basis at each point of an input 3D modeled object model. To learn this network, the learning proceeds mini-batch by mini-batch, as previously discussed:

1) Matching each 3D modeled object of each batch with the closest 3D modeled object in the same batch. In other words, selecting, among 3D modeled objects of the batch, said another 3D modeled object closest to the 3D modeled object, as previously discussed.

2) Computing the linear combination of the predicted deformation vectors of the 3D modeled object that minimizes the distance between the deformation of the 3D modeled object by a linear combination of the deformation vectors as inferred by the neural network with its current weights and its closest 3D modeled object in the batch, with additional sparse regularization terms.

3) Minimizing the same loss (the distance between the deformed 3D modeled object and its closest 3D modeled object) over the weights of the neural network, to optimize the predicted deformations basis.

This implementation does not require to cluster the different kinds of 3D modeled objects to learn each cluster separately. On the contrary, it is suited to directly learn on the whole dataset all at once. This implementation learns an uncorrelated deformations basis, where each deformation is plausible in itself. The inferred deformations are linear, and thus can be used in real-time applications. The deformations are inferred as a 3D deformation field, which maximizes the expressiveness of an input 3D modeled object.

At the providing of the dataset, this implementation may perform a pre-processing as previously discussed, in case the provided dataset is made of 3D meshes. The pre-processing comprises centering each mesh and rescaling independently its dimensions such that the mesh vertices exactly fits in a unit cube. The pre-processing comprises then extracting a dense point cloud from each normalized shape in the dataset by raycasting each one on 6 orthographic views. The pre-processing then comprises uniformly sub-sampling each point cloud (for example, by downsampling each point cloud to the same size). To do so, the pre-processing may start by a random point of the point cloud, and iteratively pick the furthest point of the point cloud from the already selected points, until reaching the a predefined (*e.g.* desired) number of points.

The architecture of the neural network according to the currently-discussed implementation is now discussed.

In this implementation, the neural network infers (*e.g.* for any input 3D modeled object), a same fixed number of deformation basis vector. Let $n$ be this fixed same size of the inferred deformations basis. This implementation comprises designing an encoder architecture $f_w$ that takes as input a 3D point cloud or a 3D mesh, and outputs a latent vector $h \in \mathbb{R}^p$, representing the input 3D point cloud or a 3D mesh. Such an encoder architecture can be based on PointNet (see for example previously cited reference [8], which is incorporated herein by reference) or its numerous extensions or can also use the mesh topology as done in MeshCNN (see for example previously cited reference [9], which is incorporated herein by reference) for example. Thus, $f_w$ can be designed to take as input a 3D mesh $x$ or its sampled 3D point cloud $y$.

In addition to $f_w$, this implementation comprises designing a deep feedforward neural network $g_w$ that takes as input the latent vector $h$ of a 3D point cloud or a 3D mesh, as well as a 3D point $x$, and outputs its deformation basis $g_w(h,x) = (u_1, \ldots, u_n) \in \mathbb{R}^{n \times 3}$, at the point $x$. To further simplify the notations, let $g_w(h,p)_j, j \in \{1, \ldots, n\}$, be the vector

$$\begin{pmatrix} g_w(h, X_1)_j \\ \ldots \\ g_w(h, X_m)_j \end{pmatrix} \in \mathbb{R}^{m \times 3},$$

for any point cloud or mesh $X \in \mathbb{R}^{m \times 3}$ containing $m$ points or vertices. Thus,

$g_w(h, X) \in \mathbb{R}^{n \times (m \times 3)}$ is the basis computed at all points of X. Besides, this implementation can built $g_w$ such that $\|g_w(h,X)_j\|_2 = 1$ for all $j \in \{1, ...,n\}$. $w$ are the trainable weights of the neural networks $f$ and $g$.

This implementation may comprise providing another encoder architecture $f'$ similar to $f_w$. As previously discussed $f'$ is trained in an autoencoder framework, or in a classification task, or any other machine learning method, in order to learn a meaningful latent space of 3D objects. This implementation uses said another encoder to efficiently match a 3D modeled object (3D mesh or 3D point cloud) with its closest 3D modeled object in a batch during the training of $f_w$.

This implementation performs, at the learning of the neural network, an unsupervised learning. This is now discussed.

The learning learns both networks $f_w$ and $g_w$ by any mini-batch stochastic optimization (*e.g.* a mini-batch stochastic gradient descent), by minimizing a loss $E(w)$ (also referred to as "an Energy") for a mini-batch of $N$ point clouds $p_1,...,p_N$. Let $e_1, ..., e_N$ be the corresponding 3D modeled objects in the input space of $f_w$, *i.e.* if these inputs are point clouds $e_i = p_i$, and if they are meshes then $e_i$ is the source mesh that was used to sample $p_i$.

For each $i$, let

$$i' = \underset{j \in [\![1,...,N]\!] \setminus \{i\}}{\operatorname{argmin}} \left\| f'(e_i) - f'(e_j) \right\|_2,$$

and $q_i = p_{i'}$. The vectors $f'(e_i)$ can be pre-computed, *i.e.* this implementation comprising the pre-computing of the vectors, for example before the learning.

Then, the loss is given by the formula:

$$E(w) = \sum_{i=1}^{N} \min_{\alpha_1,...,\alpha_p} d_{CH}\left( p_i + \sum_{j=1}^{n} \alpha_j g_w(f_w(e_i), p_i)_j, q_i \right) + \lambda \phi(\alpha_1, ..., \alpha_p)$$

$$+ \gamma \sigma\left( e_i, e_i + \sum_{j=1}^{n} \alpha_j g_w(f_w(e_i), e_i)_j \right)$$

$$+ \delta \left\| g_w(f_w(e_i), p_i) g_w(f_w(e_i), p_i)^T - \operatorname{Id}_{n \times n} \right\|_2$$

$d_{CH}$ is here the Chamfer 3D distance, but it could be replaced by any other 3D loss such as the Earth Mover distance:

$$d_{CH}(p, q) = \sum_{y \in p} \min_{z \in q} \| y - z \|_2^2 + \sum_{z \in q} \min_{y \in p} \| y - z \|_2^2.$$

$\phi$ is a sparsity-inducing function, such as the $L^1$ norm [6]. Let $(\alpha_1, ..., \alpha_p)$ be referred to as a vector of amplitudes. This implementation seeks to make the amplitudes sparse, in order to uncorrelate the deformations as much as possible, such that any deformation vector is plausible in itself. For the same reason, this implementation forces the deformations basis to be orthonormal with the $\delta$ penalization, preceding a term capturing orthonormality of the basis as previously discussed.

$\sigma(e_i, e_i + v)$ can be any regularization function, which may include a combination of, but is not limited to:

- a penalization on the difference of the lengths of the edges between $e_i$ and $e_i + v$ (if $e_i$ is a point cloud, this implementation may comprise creating edges on its points using a k-nearest neighbors graph), and
- a penalization on the difference between the Laplacian coordinates of $e_i$ and $e_i + v$, *i.e.* between $L(e_i)$ and $L(e_i + v)$ where $L$ is the Laplace operator of $e_i$.

$\lambda$, $\delta$ and $\gamma$ are trade-off parameters.

In order to minimize $E(w)$, the learning comprises computing the min over the amplitudes $(\alpha_1, \ldots, \alpha_p)$ for each input of the batch, as well as compute the gradient of $E(w)$.

For each input $i$, $\min\limits_{\alpha_1,\ldots,\alpha_p} d_{CH}\left(p_i + \sum_{j=1}^n \alpha_j g_w(f_w(e_i), p_i)_j, q_i\right) +$

$\lambda\phi(\alpha_1, \ldots, \alpha_p) + \gamma\sigma\left(e_i, e_i + \sum_{j=1}^n \alpha_j g_w(f_w(e_i), e_i)_j\right)$ can be computed using a standard gradient descent, or any continuous optimization algorithm.

However, the gradient $\nabla E(w)$ might seem untractable, as the amplitudes $\left(\widehat{\alpha_1}, \ldots, \widehat{\alpha_p}\right)$ that achieve the minimum $\min\limits_{\alpha_1,\ldots,\alpha_p}$ depend on $w$.

Let

$$\mathcal{L}(w, \alpha_1, \ldots, \alpha_p)$$

$$= d_{CH}\left(p_i + \sum_{j=1}^n \alpha_j g_w(f_w(e_i), p_i)_j, q_i\right) + \lambda\phi(\alpha_1, \ldots, \alpha_p)$$

$$+ \gamma\sigma\left(e_i, e_i + \sum_{j=1}^n \alpha_j g_w(f_w(e_i), e_i)_j\right)$$

$$+ \delta\|g_w(f_w(e_i), p_i)g_w(f_w(e_i), p_i)^T - \mathrm{Id}_{n\times n}\|_2$$

and

$$L(w) = \min\limits_{\alpha_1,\ldots,\alpha_p} d_{CH}\left(p_i + \sum_{j=1}^n \alpha_j g_w(f_w(e_i), p_i)_j, q_i\right) + \lambda\phi(\alpha_1, \ldots, \alpha_p)$$

$$+ \gamma\sigma\left(e_i, e_i + \sum_{j=1}^n \alpha_j g_w(f_w(e_i), e_i)_j\right)$$

$$+ \delta\|g_w(f_w(e_i), p_i)g_w(f_w(e_i), p_i)^T - \mathrm{Id}_{n\times n}\|_2$$

$$= \min\limits_{\alpha_1,\ldots,\alpha_p} \mathcal{L}(w, \alpha_1, \ldots, \alpha_p) = \mathcal{L}(w, \widehat{\alpha_1}, \ldots, \widehat{\alpha_p}),$$

where

$$\left(\widehat{\alpha_1}, \ldots, \widehat{\alpha_p}\right) = \underset{\alpha_1,\ldots,\alpha_p}{\mathrm{argmin}}\, \mathcal{L}(w, \alpha_1, \ldots, \alpha_p).$$

The envelope theorem makes the gradient of $\mathcal{L}(w, \alpha_1, \ldots, \alpha_p)$ tractable (and so the gradient of $E(w)$ too), as it is equal to the gradient of $\mathcal{L}(w, \alpha_1, \ldots, \alpha_p)$ where $\alpha_1, \ldots, \alpha_p$ is considered constant with respect to $w$, *i.e.* the computing of the gradient do not backpropagates through the computation of the amplitudes $\alpha_1, \ldots, \alpha_p$. Namely,

$$\nabla L(w) = \nabla_w \, \mathcal{L}(w, \widehat{\alpha_1}, \dots, \widehat{\alpha_p}).$$

This can be proven using the fact that $\nabla_{\alpha_1, \dots, \alpha_p} \mathcal{L}\left(w, \widehat{\alpha_1}, \dots, \widehat{\alpha_p}\right) = 0$ by definition of $\left(\widehat{\alpha_1}, \dots, \widehat{\alpha_p}\right)$.

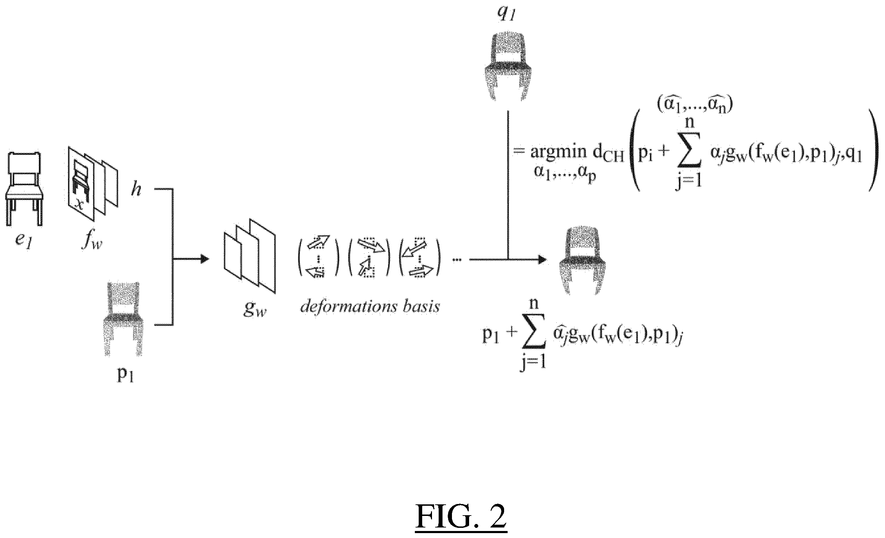

FIG. 2 illustrates the deep model architecture of the neural network learnt according to the currently-discussed implementation.

Applications of the learning method are now discussed.

By "application of the learning method", it is meant a computer-implemented method of use of a neural network learnable according to the learning method, for example the neural network directly learnt (*i.e.* having been learnt) by the learning method. The method of use may comprise using the neural network, for inferring one or more deformation basis each respective to a respective input 3D modeled object and using the inferred one or more deformation basis. The learning method may comprise the method of use, *e.g.* as a further step of the learning method, performed after the learning.

A first example of application of the learning method is depth-frame reconstruction (see for example previously-cited reference [3], which is incorporated herein by reference). The depth frame reconstruction comprises providing a 3D mesh and a depth map of another object. The other object is close to the provided 3D mesh. The depth frame reconstruction comprises then applying the neural network to the 3D mesh, which yields a deformation basis of the 3D mesh. The depth frame reconstruction uses this deformation basis to deform the provided 3D mesh into the another object represented by the depth map. The depth frame reconstruction then further comprises an optimization over the deformation basis to fit the depth map, *i.e.* the depth frame reconstruction comprises optimizing coefficients of a linear combination of the deformation basis vector so that deforming the 3D mesh by the linear combination fits the depth map. The aim of the reconstruction is to obtain a 3D modeled object corresponding to the depth map.

A second example of application of the learning method is shape matching. The shape matching comprises providing two close 3D meshes $e_1$ and $e_2$. The shape matching then comprises computing a deformation basis of the first 3D mesh $e_1$, and optimizing coefficients of a linear combination of the deformation basis vector in order to deform the first 3D mesh $e_1$ so that it matches the second 3D mesh $e_2$. For example, the shape matching may compute:

$$e_1 + \sum_{j=1}^{n} \widehat{\alpha_j} g_w(f_w(e_1), p_i)_j$$

where

$$\left(\widehat{\alpha_1}, \dots, \widehat{\alpha_p}\right) = \operatorname*{argmin}_{\alpha_1, \dots, \alpha_p} d_{CH}\left(p_1 + \sum_{j=1}^{n} \alpha_j g_w(f_w(e_1), p_1)_j, p_2\right),$$

where $p_1$ is a point cloud sampled from $e_1$ and where $p_2$ is a point cloud sampled from $e_2$.

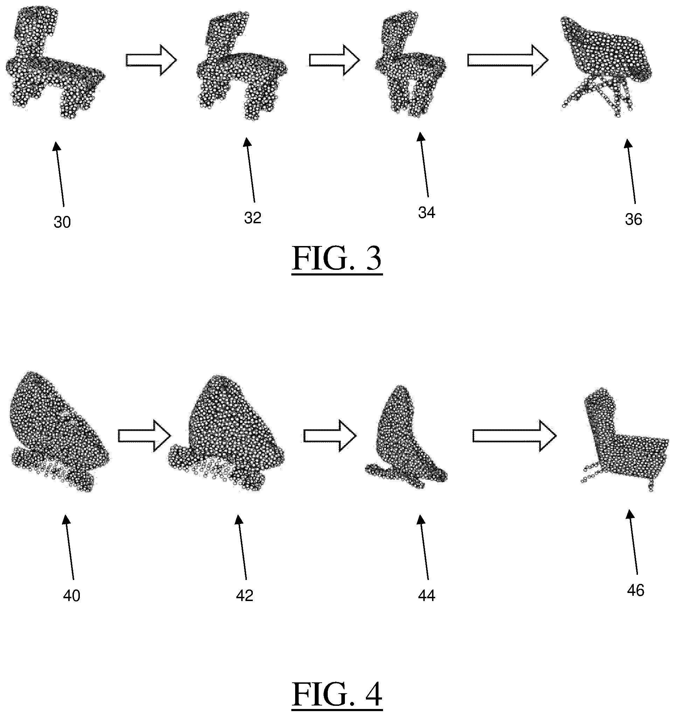

FIG. 3 illustrates a first example of shape matching. The first 3D mesh is chair 30, and the second 3D mesh is chair 36, into which chair 30 is to be matched. Chair 34 shows the result of said optimizing of the coefficients, while chair 32 shows an intermediary chair computed during the optimizing.

FIG. 4 illustrates a first example of shape matching. The first 3D mesh is chair 40, and the second 3D mesh is chair 46, into which chair 40 is to be matched. Chair 44 shows the result of said optimizing of the coefficients, while chair 42 shows an intermediary chair computed during the optimizing.

A third example application of the learning method is 3D editing. The 3D editing may comprise providing a first 3D modeled object and iteratively deforming it into a second 3D modeled object by, starting from the first 3D modeled object, iteratively applying the neural network to iterative deformations of the first 3D modeled object.

**Claims**

1. A computer-implemented method of machine-learning, the method comprising:

- providing a dataset of 3D modeled objects; and
- learning a neural network configured for inferring a deformation basis of an input 3D modeled object.

2. The method of claim 1, wherein the neural network comprises:

- an encoder configured to take as input a 3D modeled object and to output a latent vector representing the input 3D modeled object, and
- a deep feedforward neural network configured to take as input a latent vector outputted by the encoder and to output a deformation basis of a 3D modeled object represented by the latent vector.

3. The method of claim 1 or 2, wherein the learning comprises, for at least a part of the dataset, minimizing a loss which, for each 3D modeled object of the at least a part of the dataset and for each candidate deformation basis having vectors, penalizes a distance between a deformation of the 3D modeled object by a linear combination of the vectors and another 3D modeled object.

4. The method of claim 3, wherein the learning is carried out mini-batch by mini-batch and comprises, for each mini-batch, minimizing the loss.

5. The method of claim 3 or 4, wherein the learning comprises selecting said another 3D modeled object among 3D modeled objects of the at least a part of the dataset, based on a distance from the 3D modeled object of the at least a part of the dataset.

6. The method of claim 5, wherein said another 3D modeled object is, among 3D modeled objects of the at least a part of the dataset, a closest 3D modeled object to the 3D modeled object of the at least a part of the dataset.

7. The method of claim 6, wherein the learning is carried out mini-batch by mini-batch and comprises, for each mini-batch, minimizing the loss and selecting said closest 3D modeled object among 3D modeled objects of the mini-batch.

8. The method of any one of claims 3 to 7, wherein the loss penalizes a minimum of the distance between the deformation of the 3D modeled object by the linear combination of the vectors and said another 3D modeled object.

9. The method of claim 8, wherein the loss is of the type:

$$E(w) = \sum_{i=1}^{N} \min_{\alpha_1, \ldots, \alpha_p} d_{CH}\left( p_i + \sum_{j=1}^{n} \alpha_j g_w(f_w(e_i), p_i)_j, q_i \right),$$

where:

- $e_1, \ldots, e_N$ are the 3D modeled objects of the at least a part of the dataset, $N$ being the number of objects in the at least a part of the dataset,
- $p_1, \ldots, p_N$ are points clouds respectively obtained from $e_1, \ldots, e_N$,
- for each 3D modeled object $e_i$, $g_w(f_w(e_i), p_i)_1, \ldots, g_w(f_w(e_i), p_i)_n$ are the vectors of a candidate deformation basis of the 3D modeled object, $n$ being the size of the candidate deformation basis,
- $p_i + \sum_{j=1}^{n} \alpha_j g_w(f_w(e_i), p_i)_j$ is the deformation of the 3D modeled object $e_i$ by the linear combination of the vectors, $\alpha_1, \ldots, \alpha_n$ being coefficients of the linear combination,
- $q_i$ is a point cloud obtained from said another 3D modeled object,
- $d_{CH}$ is the distance,
- the neural network having weights, $w$ represents the weights of the neural network,
- $f_w$ is an encoder configured to take as input a 3D modeled object and to output a latent vector representing the input 3D modeled object, and
- $g_w$ is a deep feedforward neural network configured to take as input a latent vector outputted by the encoder and to output a deformation basis of a 3D modeled object represented by the latent vector.

**10.** The method of any one of claims 3 to 9, wherein the loss further penalizes a sparsity-inducing function that takes as input coefficients of the linear combination.

**11.** The method of any one of claims 3 to 10, wherein the loss further rewards orthonormality of the candidate deformation basis.

**12.** A neural network learnable according to the method of any one of claims 1 to 11.

**13.** A computer program comprising instructions which, when the computer program is carried out on a computer, cause the computer to carry out the method according of any one of claims 1 to 11.

**14.** A computer-readable data storage medium having recorded thereon the computer program of claim 13 and/or the neural network of claim 12.

**15.** A computer comprising a processor coupled to a memory, the memory having recorded thereon the computer program of claim 13 and/or the neural network of claim 12.

FIG. 1

$q_1$

$$\overbrace{(\widehat{\alpha_1},...,\widehat{\alpha_n})}^{} = \operatorname*{argmin}_{\alpha_1,...,\alpha_p} d_{CH}\left(p_i + \sum_{j=1}^{n} \alpha_j g_w(f_w(e_1),p_1)_j, q_1\right)$$

$e_1$   $f_w$   $h$

$g_w$   *deformations basis*

$p_1$

$$p_1 + \sum_{j=1}^{n} \widehat{\alpha_j} g_w(f_w(e_1),p_1)_j$$

FIG. 2

30 → 32 → 34 → 36

FIG. 3

40 → 42 → 44 → 46

FIG. 4

Europäisches
Patentamt

European
Patent Office

Office européen
des brevets

# EUROPEAN SEARCH REPORT

Application Number

EP 20 30 5081

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | MEHR ELOI ET AL: "DiscoNet: Shapes Learning on Disconnected Manifolds for 3D Editing", 2019 IEEE/CVF INTERNATIONAL CONFERENCE ON COMPUTER VISION (ICCV), IEEE, 27 October 2019 (2019-10-27), pages 3473-3482, XP033723308, DOI: 10.1109/ICCV.2019.00357 [retrieved on 2020-02-24] * the whole document * | 1-15 | INV. G06N3/04 G06N3/08 |
| A,D | JACK DOMINIC ET AL: "Learning Free-Form Deformations for 3D Object Reconstruction", 2 June 2019 (2019-06-02), ROBOCUP 2008: ROBOCUP 2008: ROBOT SOCCER WORLD CUP XII; [LECTURE NOTES IN COMPUTER SCIENCE; LECT.NOTES COMPUTER], SPRINGER INTERNATIONAL PUBLISHING, CHAM, PAGE(S) 317 - 333, XP047509089, ISBN: 978-3-319-10403-4 [retrieved on 2019-06-02] * the whole document * | 1-15 | |
| A | YUMER M ERSIN ET AL: "Learning Semantic Deformation Flows with 3D Convolutional Networks", 17 September 2016 (2016-09-17), PERVASIVE: INTERNATIONAL CONFERENCE ON PERVASIVE COMPUTING; [LECTURE NOTES IN COMPUTER SCIENCE; LECT.NOTES COMPUTER], SPRINGER, BERLIN, HEIDELBERG, PAGE(S) 294 - 311, XP047355304, ISBN: 978-3-642-17318-9 [retrieved on 2016-09-17] * the whole document * | 1-15 | TECHNICAL FIELDS SEARCHED (IPC) G06N |

-/--

The present search report has been drawn up for all claims

| Place of search | Date of completion of the search | Examiner |
|---|---|---|
| The Hague | 29 July 2020 | Moro Pérez, Gonzalo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 20 30 5081

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | QINGYANG TAN ET AL: "Variational Autoencoders for Deforming 3D Mesh Models", ARXIV.ORG, CORNELL UNIVERSITY LIBRARY, 201 OLIN LIBRARY CORNELL UNIVERSITY ITHACA, NY 14853, 13 September 2017 (2017-09-13), XP081309912, * the whole document * | 1-15 | |
| A | STERGIOS CHRISTODOULIDIS ET AL: "Linear and Deformable Image Registration with 3D Convolutional Neural Networks", 12 September 2018 (2018-09-12), PERVASIVE: INTERNATIONAL CONFERENCE ON PERVASIVE COMPUTING; [LECTURE NOTES IN COMPUTER SCIENCE; LECT.NOTES COMPUTER], SPRINGER, BERLIN, HEIDELBERG, PAGE(S) 13 - 22, XP047485133, ISBN: 978-3-642-17318-9 [retrieved on 2018-09-12] * the whole document * | 1-15 | TECHNICAL FIELDS SEARCHED (IPC) |
| A | DUBROVINA ANASTASIA ET AL: "Composite Shape Modeling via Latent Space Factorization", 2019 IEEE/CVF INTERNATIONAL CONFERENCE ON COMPUTER VISION (ICCV), IEEE, 27 October 2019 (2019-10-27), pages 8139-8148, XP033723590, DOI: 10.1109/ICCV.2019.00823 [retrieved on 2020-02-24] * the whole document * | 1-15 | |

The present search report has been drawn up for all claims

| Place of search | Date of completion of the search | Examiner |
|---|---|---|
| The Hague | 29 July 2020 | Moro Pérez, Gonzalo |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**EP 3 859 610 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9978177 B2

**Non-patent literature cited in the description**

- **W. WANG ; D. CEYLAN ; R. MECH ; U. NEUMANN.** 3dn: 3d deformation network. *In Conference on Computer Vision and Pattern Regognition (CVPR),* 2019
- **T. GROUEIX ; M. FISHER ; V. G. KIM ; B. RUSSELL ; M. AUBRY.** AtlasNet: A Papier-Mâché Approach to Learning 3D Surface Generation. *In Conference on Computer Vision and Pattern Regognition (CVPR),* 2018
- **D. JACK ; J. K. PONTES ; S. SRIDHARAN ; C. FOOKES ; S. SHIRAZI ; F. MAIRE ; A. ERIKSSON.** Learning free-form deformations for 3d object reconstruction. *In Asian Conference on Computer Vision (ACCV),* 2018
- **I. KOKKINOS ; A. YUILLE.** Unsupervised Learning of Object Deformation Models. *In International Conference on Computer Vision (ICCV),* 2007
- **J. MAIRAL ; F. BACH ; J. PONCE.** Sparse Modeling for Image and Vision Processing. *New Foundations and Trends,* 2014
- **V. BLANZ ; T. VETTER.** A morphable model for the synthesis of 3d faces. *In SIGGRAPH,* 1999
- **C. QI, H. SU, K. MO, AND L. GUIBAS.** Pointnet: Deep learning on point sets for 3d classification and segmentation. *In Conference on Computer Vision and Pattern Regognition (CVPR),* 2017
- **R. HANOCKA ; A. HERTZ ; N. FISH ; R. GIRYES ; S. FLEISHMAN ; D. COHEN-OR.** Meshcnn: A network with an edge. *In SIGGRAPH,* 2019
- **ELOI MEHR ; ARIANE JOURDAN ; NICOLAS THOME ; MATTHIEU CORD ; VINCENT GUITTENY.** DiscoNet: Shapes Learning on Disconnected Manifolds for 3D Editing. *In ICCV,* 2019